Europäisches Patentamt

European Patent Office

Office européen des brevets

(19)

(11) **EP 1 290 647 B1**

(12) **FASCICULE DE BREVET EUROPEEN**

(45) Date de publication et mention
de la délivrance du brevet:
**19.11.2003 Bulletin 2003/47**

(21) Numéro de dépôt: **01940645.3**

(22) Date de dépôt: **30.05.2001**

(51) Int Cl.7: **G07F 7/10**

(86) Numéro de dépôt international:
**PCT/FR01/01684**

(87) Numéro de publication internationale:
**WO 01/093216 (06.12.2001 Gazette 2001/49)**

(54) **PROCEDE DE CRYPTOGRAPHIE ET MICROCIRCUIT POUR CARTE A PUCE**

KRYPTOGRAPHISCHES VERFAHREN UND MIKROSCHALTUNG FÜR CHIPKARTE

CRYPTOGRAPHY METHOD AND SMART CARD MICROCIRCUIT

(84) Etats contractants désignés:
**AT BE CH CY DE DK ES FI FR GB GR IE IT LI LU MC NL PT SE TR**

(30) Priorité: **31.05.2000 FR 0007040**

(43) Date de publication de la demande:
**12.03.2003 Bulletin 2003/11**

(73) Titulaire: **FRANCE TELECOM
75015 Paris (FR)**

(72) Inventeurs:
• **PAILLES, Jean-Claude
F-14610 Epron (FR)**

• **GIRAULT, Marc
F-14000 Caen (FR)**

(74) Mandataire: **Bentz, Jean-Paul
Cabinet Ballot,
122, rue Edouard Vaillant
92593 Levallois-Perret Cedex (FR)**

(56) Documents cités:
**WO-A-99/01960**

• **NACCACHE D ET AL: "CRYPTOGRAPHIC SMART CARDS" IEEE MICRO, US, IEEE INC. NEW YORK, vol. 16, no. 3, 1 juin 1996 (1996-06-01), pages 14-24, XP000594074 ISSN: 0272-1732**

**Description**

L'invention concerne un procédé de cryptographie dans une carte à puce comprenant une unité centrale, le procédé mettant en oeuvre des précalculs. L'invention concerne également un microcircuit pour carte à puce susceptible de communiquer avec l'extérieur à travers une interface d'entrées-sorties, ledit microcircuit comprenant des moyens d'exécution de tâches dont une tâche de calcul et des moyens de gestion de l'exécution des tâches.

Elle s'applique aux cartes à puce(s) à contact ou sans contact ainsi qu'aux combi-cartes, c'est-à-dire les cartes supportant les deux modes de fonctionnement « à contact » et « sans contact ».

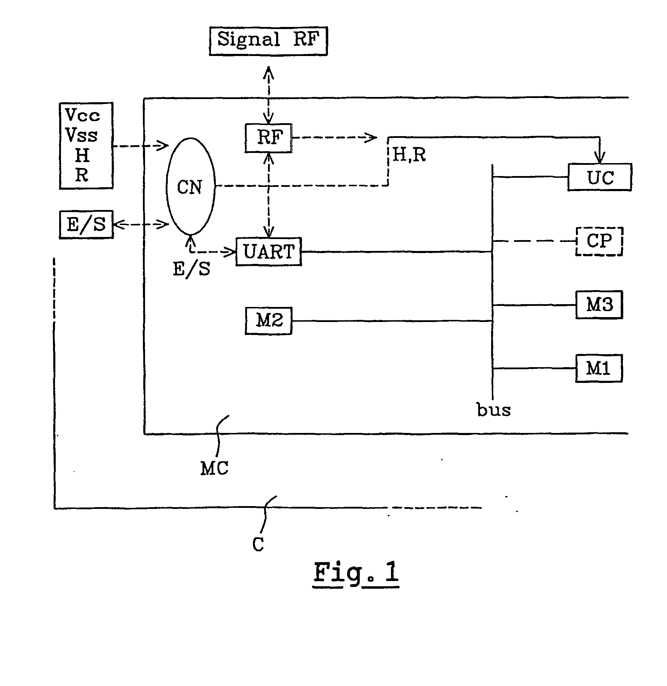

Une carte à puce(s) C comporte un microcircuit MC représenté figure 1 comprenant essentiellement une interface d'entrée-sortie, un microprocesseur UC, une mémoire de programme de fonctionnement M1 par exemple ROM (« Read Only Memory » en anglais, désignant une mémoire à lecture seule), une mémoire de programmes d'application(s) M3 par exemple EEPROM («Electrically Erasable Programmable Read Only Memory" en anglais, désignant une mémoire morte programmable par l'utilisateur et effaçable électriquement ), une mémoire de travail M2 par exemple RAM (« Random Acces Memory » en anglais, désignant une mémoire vive volatile).

L'interface d'entrée-sortie est dans le cas des cartes à puces à contacts réalisée par une unité asynchrone de réception ou de transmission UART et un connecteur CN comprenant en général huit plages de contacts affleurant sur la carte.

Cette interface d'entrée-sortie est dans le cas des cartes à puces sans contact réalisée par l'unité asynchrone UART et un dispositif émetteur-récepteur radio-fréquence RF comprenant une antenne.

Dans le cas des cartes à puces à fonctionnement mixte, cette interface comporte bien entendu le dispositif RF et les plages de contacts CN.

Le domaine de l'invention est celui des cartes à puce(s) utilisant les résultats de calculs d'exponentiation notée $g^x$ et souvent réalisée modulo n. Ces calculs sont exécutés dans de nombreuses applications basées notamment sur la signature ou l'authentification de messages.

Parmi les schémas d'authentification ou de signature, les plus pratiques et les plus sûrs actuellement sont les algorithmes à clé publique. Parmi ceux-ci le plus connu et le plus utilisé est l'algorithme RSA ( du nom de ses inventeurs R. Rivest, A. Shamir et L. Adleman) coûteux en temps de calcul. Les schémas basés sur le logarithme discret sont également connus depuis longtemps et présentent l'avantage de se prêter à des précalculs concernant en particulier les calculs d'exponentiation très coûteux en temps.

L'invention s'applique aux cartes à microcircuit mettant en oeuvre des algorithmes de cryptographie à clé publique utilisant le logarithme discret dans n'importe quelle structure mathématique, notamment les anneaux de nombres modulo n (n appartenant à l'ensemble Zn, l'ensemble des entiers positifs inférieurs à n), les courbes elliptiques sur des corps finis GF(q) (GF(q) étant le corps dont le nombre d'éléments est q, avec q prmier ou puissance d'un nombre premier). L'exponentiation $g^x$ permet de couvrir toutes ces structures.

Des exemples de procédés mettant en oeuvre de tels calculs sont présentés dans le brevet FR n° FR 2 716 058.

Dans le cas de Zn et des réalisations actuelles qui nécessitent des calculs de type exponentiation modulaire ($b^x$ modulo n) où les nombres b, x et n ont couramment des longueurs de 768 à 1024 bits, les performances sont de l'ordre de 500 à 300 ms. Ces performances ne peuvent être atteintes qu'avec des microprocesseurs 8 bits avec « crypto-processeur », capables d'effectuer des multiplications et des réductions modulo n à grande vitesse ou avec des microprocesseurs 16 ou 32 bits dont les performances intrinsèques permettent d'atteindre ces performances sans avoir recours à une cellule de calcul spécifique tel qu'un crypto-processeur.

Ces performances ne sont pas suffisantes dans certains cas. On va présenter un exemple d'utilisation des combi-cartes pour les transports en commun.

-    La carte fonctionnant en mode sans contact, doit permettre à un terminal lors de l'entrée dans la station de métro ou dans l'autobus, d'authentifier le titre de transport, de vérifier un droit à tel type de réduction, ou/et de recevoir le paiement par porte-monnaie électronique (PME). Pour ce type de transaction, comme en général pour celles de type PME, les algorithmes de cryptographie à clé publique sont utilisés pour des raisons de gestion de clé, de respect de normes et in fine de sécurité.

   Ce type de transaction doit se dérouler en moins de 150 ms, le temps pour un utilisateur de passer la carte d'un geste naturel devant un terminal intégré dans un portillon ou situé à l'entrée d'un autobus. Ces 150 ms doivent alors couvrir non seulement les calculs cryptographiques mais aussi les entrées-sorties des messages et les traitements autres que cryptographiques, qu'ils soient effectués côté terminal ou côté carte. Les traitements côté terminal et côté carte ne peuvent se dérouler en parallèle car ils s'enchaînent selon un ordre précis établi par un protocole prédéfini. Dans la pratique, compte tenu des temps de calcul requis côté terminal, les calculs cryptographiques côté carte doivent donc se dérouler en moins d'environ 30 ms.

   Aucun composant de carte à microcircuit actuel ne permet d'atteindre de telles performances. De plus, du fait qu'en mode sans contact la carte est alimentée par l'énergie rayonnée par le terminal et récupérée sur l'antenne, la puissance consommable est limitée et par conséquent les capacités de calcul le sont également.

- En mode avec contact, ces contraintes n'existent pas avec autant d'acuité. Il suffit par exemple lors d'un paiement par porte-monnaie électronique de ne pas faire attendre le client au point de vente plus de quelques secondes. Cependant certains opérateurs exigent que la transaction reste courte, de l'ordre d'une seconde.

Pour connaître les détails des calculs effectués par un algorithme de cryptographie à clé publique, on se reportera au brevet FR n° 2 716 058 dans lequel est présenté un procédé de signature numérique et d'authentification de messages utilisant un logarithme discret.

Le procédé tel que décrit dans le brevet mentionné ci-dessus peut être résumé de la façon suivante.

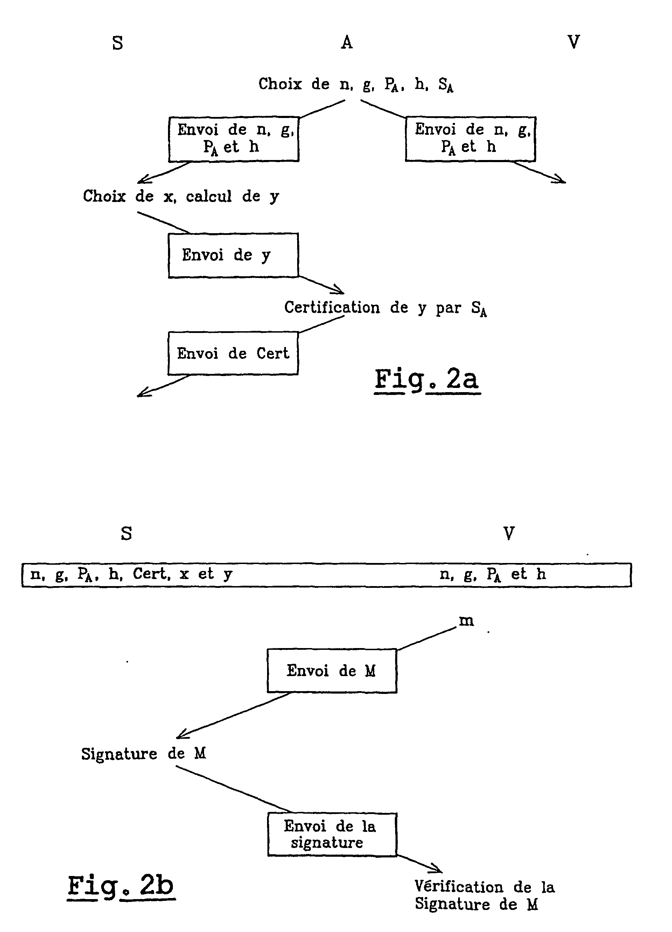

Le procédé de signature est précédé d'une phase préliminaire représentée figure 2a).

Une autorité A, par exemple une banque ou un organisme de transports, détenant une clé publique $P_A$ et une clé secrète $S_A$ de signature, choisit un nombre n (nombre premier ou composé de nombres premiers) et g (entier inférieur à n et généralement beaucoup plus petit) ainsi qu'une fonction de hachage h et transmet $P_A$, n, g et h à l'entité S qui devra signer un message par exemple une carte à puce devant valider un montant à payer ainsi qu'aux entités V qui devront vérifier la signature par exemple un terminal tel que ceux que les commerçants présentent actuellement à leurs clients.

L'entité S choisit une clé secrète x, calcule sa clé publique $y = g^{-x} \mod n$, l'envoie à l'autorité A qui lui retourne un certificat Cert lui-même établi en particulier à partir de sa clé secrète $S_A$ de signature.

Les données n, g, x, y, Cert sont des données permanentes de l'entité S.

Cette phase préliminaire étant terminée, le procédé de signature d'un message M peut débuter. Il peut s'agir pour S comme représenté figure 2b) de signer un montant à payer proposé par V ; le message M contient notamment le montant à payer m et une identification du terminal V demandant ce paiement.

Les étapes de ce procédé de signature sont les suivantes :

  a) S choisit aléatoirement k,
  b) calcule un témoin $r = g^k \mod n$
  c) calcule par une fonction de hachage h connue de A, S et V, $c = h(r,M)$
  d) calcule enfin $s = k+cx$.
  e) S envoie à V ces informations : y, Cert, M, c, s.

V vérifie Cert avec $P_A$, calcule $u = y^c g^s \mod n$ et vérifie que $c = h(u,M)$. Si la vérification est juste, la signature de M est authentifiée.

Parmi les étapes de ce procédé, l'une consiste à calculer à chaque transaction un témoin r exigeant une exponentiation ($r = g^k \mod n$ par exemple). Cette opération est très consommatrice de temps ; c'est pourquoi il est parfois prévu de précalculer ces témoins. Mais ces précalculs sont effectués par un organe extérieur puis les couples (k,r) sont écrits dans une zone de stockage de la carte, par exemple M3 ce qui présente des inconvénients.

En effet, la connaissance des données nécessaires au calcul de ces témoins et des témoins eux-mêmes permet de retrouver la clé secrète de cryptographie. En effet la connaissance de r et k donne $c = h(r, M)$ ; la connaissance de $s=k+cx$ et k et c donne x. Le secret est donc partagé entre l'entité censée le détenir et par cet organe extérieur en lequel il faut donc avoir une très grande confiance.

Il faut également être assuré de la sécurité totale de l'envoi des couples (k,r) à la carte et de leur écriture.

De plus, si la carte ne contient plus de couples (k,r), il faut en recharger ce qui nécessite un terminal particulier connecté à un réseau.

Le but de l'invention est d'éviter ces inconvénients en faisant en sorte que les couples (k, r) soient calculés par la carte sans que la durée des transactions en soit pénalisée.

Ceci est obtenu en se basant sur le fait que dans un microprocesseur de carte à puce(s) (ou d'ordinateur en général), une fraction importante du temps est consacrée à l'attente d'événements extérieurs. Pendant ces temps ou périodes d'attente c'est-à-dire lorsque la carte attend un nouveau message de commande du terminal, ou bien lorsque la carte est en phase de réception ou d'émission d'un message long sur son port d'entrées sorties, le microprocesseur peut calculer les témoins r si la zone de stockage des couples (k,r) n'est pas pleine.

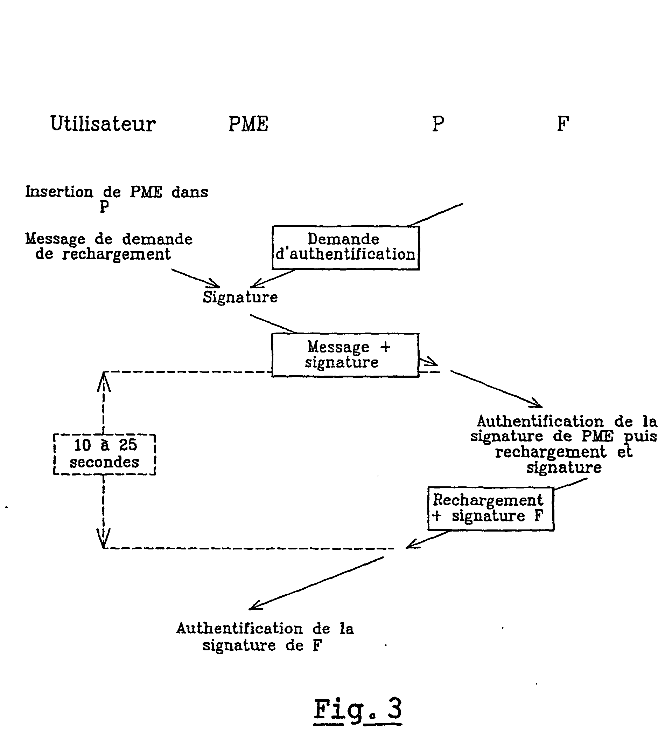

On va mettre en évidence ces temps d'attente dans le cas représenté figure 3 du rechargement d'une carte porte-monnaie électronique (PME) de type combicarte via un dispositif P relié à travers un réseau R de télécommunication ou informatique au serveur de rechargement d'un organisme financier F. Ce dispositif P peut être un Minitel ou un ordinateur ou encore un téléphone portable bi-fente tel qu'il en existe déjà, pouvant recevoir outre la carte SIM ("Subscriber Indentity Module" en anglais, désignant un module d'identification du client) habituelle une autre carte notamment une carte PME.

Après l'introduction de la carte PME dans le dispositif P, la carte fonctionnant alors en mode à contact, le dispositif P demande à la carte PME de s'authentifier. La signature de PME est transmise par P à F via R ainsi que le montant à recharger sur la carte PME. A compter du début de cette transmission, la carte PME introduite dans le dispositif P est en attente.

La transmission au serveur de F à travers le réseau dure environ de 5 à 10 secondes. L'authentification par le serveur de F de la signature de PME et la signature par F du montant à recharger peut durer environ 2 secondes. De même la transmission de F à P à travers le réseau R du message de rechargement signé peut de nouveau prendre 5 à 10 secondes. Le temps d'attente de la carte aura duré environ 15 secondes.

Après réception par P puis par la carte PME du message de rechargement, celle-ci vérifie la signature de F, puis si l'authentification est réussie, la carte PME met à jour son crédit.

Dans cet exemple, la carte dispose ainsi de temps d'attente suffisants pour procéder à des précalculs.

L'invention a pour objet un procédé de cryptographie dans une carte à puce(s) comprenant une unité centrale, ledit procédé mettant en oeuvre des précalculs, principalement caractérisé en ce que lesdits précalculs sont réalisés par la carte à puce(s) et en ce que les précalculs sont réalisés lors d'une session pendant les périodes d'attente d'entrées-sorties de l'unité centrale.

Ce procédé met éventuellement en oeuvre un algorithme basé sur le calcul d'un logarithme discret.

Selon une caractéristique, les précalculs comprennent donc des calculs d'exponentiation.

Les précalculs sont avantageusement effectués par étapes en réalisant des calculs intermédiaires, les résultats de ces calculs intermédiaires étant stockés dans la carte à puce(s).

L'invention a également pour objet un microcircuit pour carte à puce(s) susceptible de communiquer avec l'extérieur à travers une interface d'entrées-sorties I, comprenant des moyens d'exécution de tâches ET dont une tâche de calcul PC et des moyens de gestion GE de l'exécution des tâches, caractérisé en ce que les moyens de gestion GE comportent des moyens d'activation APC de la tâche de calcul PC pendant les temps d'attente de la ou des autres tâches actives sur le microcircuit.

Selon une caractéristique de l'invention, les moyens d'exécution ET des tâches comportent un microprocesseur UC, une mémoire de programme M1 comprenant le programme de gestion de l'exécution des tâches et une mémoire M3 de programmes d'application comprenant la ou les tâches exécutables sous la forme d'un ou plusieurs programmes d'application.

Les moyens d'exécution ET des tâches peuvent comporter en outre un circuit de calcul cryptographique CP.

Selon une autre caractéristique de l'invention, les moyens d'exécution ET des tâches sont aptes à réaliser des calculs d'exponentiation.

Selon un mode de réalisation de l'invention, les moyens d'activation APC de la tâche de calcul comportent un circuit d'ordonnancement O des entrées-sorties de/sur la carte apte à activer les moyens d'exécution ET des tâches lorsque ledit circuit d'ordonnancement O est en attente d'une entrée ou d'une sortie.

Le microcircuit comprend de façon préférentielle des moyens de stockage M3 des résultats desdits calculs.

L'invention a aussi pour objet une carte à microcircuit sans contact et/ou à contact, comprenant un microcircuit tel que décrit précédemment.

D'autres particularités et avantages apparaîtront clairement à la lecture de la description faite à titre d'exemple non limitatif et en regard des dessins annexés sur lesquels :

- la figure 1 est une représentation schématique d'un microcircuit de carte à puce(s),
- la figure 2a) schématise le déroulement de la phase préliminaire de certification, nécessaire avant l'utilisation d'un procédé de signature,
- la figure 2b) schématise le déroulement de la phase de signature d'un procédé de signature,
- la figure 3 schématise le déroulement d'une transaction de rechargement d'un porte-monnaie électronique,
- la figure 4 est un organigramme présentant le fonctionnement des moyens d'activation APC,
- la figure 5 est l'organigramme d'un exemple de précalcul selon l'invention.

Les microcircuits des cartes à puce(s) telles que celles considérées dans l'invention sont constitués de différents éléments reliés entre eux par un bus dont les plus importants sont représentés figure 1.

L'unité centrale UC ou microprocesseur exécute les instructions des programmes stockés dans une mémoire M1 non volatile de type ROM. Cette unité centrale UC reçoit classiquement à travers une interface I les signaux d'horloge H et de remise à zéro R ("Reset" en anglais). Lorsque la carte fonctionne en mode à contact, les signaux H et R proviennent des contacts alors que lorsque la carte fonctionne en mode sans contact, ces signaux sont fournis par l'onde radio fréquence reçue à travers un dispositif radio fréquence RF.

Cette unité centrale UC est parfois secondée par un crypto-processeur CP spécialisé dans le traitement rapide des opérations d'exponentiation modulo n.

La mémoire M1 contient des moyens de gestion de l'exécution GE des tâches qui dans certains cas sont inclus dans le système d'exploitation COS (« Chip ou Card Operating System » en anglais, désignant le système d'exploitation du microcircuit ou de la carte). Le COS a pour fonction la gestion des entrées-sorties, l'organisation et la gestion de la mémoire, la gestion des autorisations d'accès (codes confidentiels), l'organisation de la réponse au signal de Reset, le chargement éventuel de sous-programmes spécifiques lors de la personnalisation de la carte ou pendant la durée d'utilisation de la carte. La mémoire M1 contient aussi parfois les programmes des applications.

Les programmes de la mémoire M1 utilisent des mémoires de travail M2 de type RAM ou des registres et des mémoires permanentes M3 de type EEPROM pour les données permanentes qui ne doivent pas être effacées même si le microcircuit n'est plus alimenté. Les programmes des applications sont souvent stockés dans ces mémoires M3.

Le microcircuit communique avec l'extérieur par l'intermédiaire d'une unité asynchrone de réception ou de transmission UART chargée de recevoir ou transmettre des messages sous forme de blocs de plusieurs octets. Cette unité asynchrone UART communique elle-même avec la liaison série d'entrée/sortie ES à travers une interface I. Dans le cas des cartes à contact, les messages passent par les plages de contact et dans le cas des cartes sans contact, les messages passent à travers le dispositif radio fréquence RF.

Le microcircuit est alimenté en énergie par l'interface I elle-même alimentée par la tension d'alimentation notée Vcc (Vcc = 5 Volts) et par la masse électrique notée Vss (Vss = 0 Volt). En mode à contact, l'interface I est alimentée à travers les contacts alors qu'en mode sans contact, elle est alimentée par le signal radio fréquence à travers le dispositif radio fréquence RF.

Selon l'invention, dans le système d'exploitation COS stocké dans la mémoire M1 sont prévus des moyens de gestion GE de l'exécution des tâches ET des différentes tâches constituant les applications. Parmi ces tâches on distingue la tâche de calcul PC : elle sera activée par les moyens de gestion GE pendant les temps d'attente des autres tâches qui seront ainsi mis à profit pour effectuer des précalculs et les sauvegarder dans la mémoire M3.

A cet effet, les moyens de gestion GE comportent des moyens d'activation APC de la tâche de précalcul PC. Ces moyens d'activation APC peuvent consister en un programme ou être intégrés dans un circuit d'ordonnancement O.

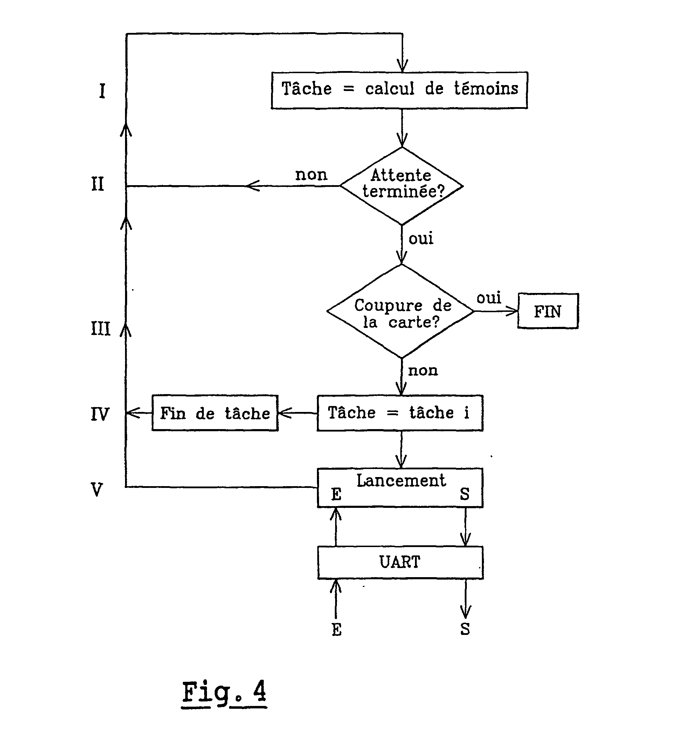

On va décrire le fonctionnement de ces moyens d'activation APC représenté figure 4 alors que la tâche « Calcul de témoins » est active c'est-à-dire lorsqu'un précalcul de témoin est en cours, étape I.

Lorsqu'un événement extérieur se manifeste, c'est-à-dire lorsque les temps d'attente dont la tâche "calcul de témoins" profitaient pour exécuter ses calculs sont terminés (étape II), et si l'alimentation de la carte n'est pas coupée (étape III), les moyens APC donnent la main à qui de droit :

- si l'événement extérieur correspond à la réception d'un nouveau message de N octets par l'UART, les moyens APC donnent alors la main à la tâche qui était en attente de ce message, par exemple la tâche t1 (étape IV),
- si l'événement extérieur correspond à la fin d'émission d'un message de N' octets par l'UART, les moyens APC donnent alors la main à la tâche qui avait émis ce message, par exemple la tâche t2 (étape IV).

Puis lorsque la tâche ti (t1 ou t2 dans notre exemple) à laquelle les moyens APC ont redonné la main se termine ou qu'un événement extérieur intervient (étape V) provoquant une attente, les moyens APC redonnent la main à la tâche "calcul de témoins" pendant ce temps d'attente jusqu'à ce que cette tâche " calcul de témoins" ait terminé (la zone de stockage des témoins est pleine) ou qu'un événement extérieur se manifeste (étape V) et on est alors ramené à la situation initiale.

On peut considérer que les moyens APC gèrent les priorités entre les tâches, les tâches des applications étant toujours prioritaires sur la tâche "calcul des témoins".

Le calcul de témoin peut être long : plusieurs centaines de ms. Dans la mesure où ce calcul peut être interrompu par les autres tâches qui sont prioritaires ou par une coupure d'alimentation, ce calcul est effectué par étapes, les résultats intermédiaires étant sauvegardés dans la zone de stockage en l'occurrence la mémoire M3. Ainsi un calcul entamé mais non terminé ne sera pas perdu et pourra être repris sans avoir à refaire tout le calcul déjà effectué, lorsque les moyens APC redonneront la main à cette tâche de "calcul de témoins". Si la tâche est interrompue pendant l'étape m, les résultats de l'étape m-1 ayant été sauvegardés, les calculs reprendront au début de l'étape m lorsque les moyens APC redonneront de nouveau la main à la tâche.

Une étape est elle-même composée de boucles élémentaires et un compteur de boucles permet de déclencher la sauvegarde si un nombre prédéterminé de boucles a été compté. Pour fixer les idées, on peut si k fait 300 bits, organiser le calcul en 10 étapes de 30 boucles chacunes.

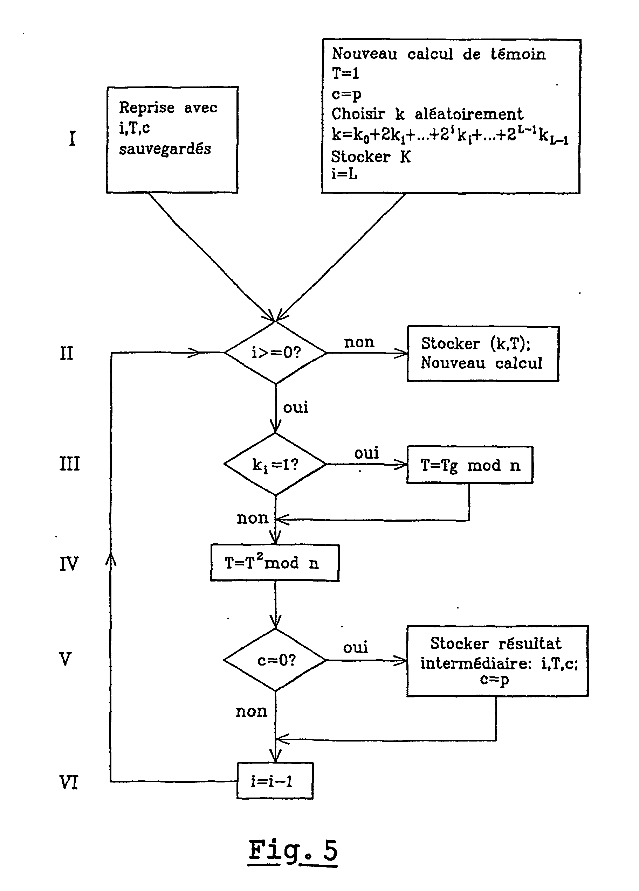

Un exemple dont l'organigramme est présenté figure 5 illustre ce processus en calculant le témoin r selon la formule

$$r = g^k \bmod n$$

Une étape préliminaire I précède le calcul lui-même : elle consiste à choisir k et à initialiser les paramètres qui seront utilisés par la suite, avec les valeurs des paramètres sauvegardés ou des valeurs par défaut. Le calcul s'effectue selon une boucle comportant les étapes II à VI consistant en des comparaisons, des calculs et des sauvegardes ou stockages.

Ces calculs de témoins par la carte pendant les temps d'attente permettent lors d'une transaction de remplacer les étapes a) et b) (« choisir k et calculer r ») du procédé de signature décrit initialement par « lire un couple (k,r) dans la zone de stockage », cette zone de stockage ayant été remplie selon un procédé équivalent à celui indiqué précédemment. Les autres calculs restant à exécuter par la carte sont des calculs simples et rapides. Les calculs cryptographiques côté carte se déroulent alors en moins d'environ 10 ms et permettent ainsi d'atteindre facilement les performances requises.

On peut par ailleurs économiser de l'emplacement en mémoire.

En effet, si k est généré par un générateur pseudo aléatoire reproductible, alors k n'a pas à être sauvegardé : seuls les paramètres d'entrée du générateur peuvent être sauvegardés, ce qui représente une économie d'emplacement mémoire.

De même il n'est pas nécessaire de stocker le couple (k,r) intégralement : une restriction à un petit nombre de bits de $g^k$ mod n suffit. Un exemple est donné dans le brevet n° FR 2 752 122.

**Revendications**

1. Procédé de cryptographie comprenant des étapes de calcul cryptographiques mis en oeuvre par une carte à puce(s) comprenant une unité centrale, ledit procédé comprenant en outre une ou plusieurs étapes de précalculs, **caractérisé en ce que** la ou lesdites étapes de précalculs sont réalisées par la carte à puce(s) elle-même et **en ce que** la ou lesdites étapes de précalculs sont réalisées lors d'une session opérée par la carte à puce et pendant des périodes d'attente d'entrées-sorties de son unité centrale.

2. Procédé de cryptographie selon la revendication 1, **caractérisé en ce que** ledit procédé met en oeuvre un algorithme basé sur le logarithme discret.

3. Procédé de cryptographie selon l'une des revendications précédentes, **caractérisé en ce que** les précalculs comprennent des calculs d'exponentiation.

4. Procédé de cryptographie selon l'une des revendications précédentes, **caractérisé en ce que** les précalculs sont effectués par étapes en réalisant des calculs intermédiaires et **en ce que** les résultats de ces calculs intermédiaires sont stockés dans la carte à puce(s).

5. Microcircuit pour carte à puce(s) susceptible de communiquer avec l'extérieur à travers une interface d'entrées-sorties (I), comprenant des moyens d'exécution de tâches (ET) dont une tâche de calcul (PC) et des moyens de gestion (GE) de l'exécution des tâches, **caractérisé en ce que** les moyens de gestion (GE) comportent des moyens d'activation (APC) de la tâche de calcul (PC) pendant les temps d'attente de la ou des autres tâches actives sur le microcircuit.

6. Microcircuit selon la revendication 5, **caractérisé en ce que** les moyens d'exécution (ET) des tâches comportent un microprocesseur (UC), une mémoire de programme (M1) comprenant le programme de gestion de l'exécution des tâches et une mémoire (M3)de programmes d'application comprenant la ou les tâches exécutables sous la forme d'un ou plusieurs programmes d'application.

7. Microcircuit selon la revendication 6, **caractérisé en ce que** les moyens d'exécution (ET) des tâches comportent en outre un circuit de calcul cryptographique (CP).

8. Microcircuit selon l'une des revendications 5 à 7, **caractérisé en ce que** les moyens d'exécution (ET) des tâches sont aptes à réaliser des calculs d'exponentiation.

9. Microcircuit selon l'une des revendications 5 à 8, **caractérisé en ce que** les moyens d'activation (APC) de la tâche de calcul comportent un circuit d'ordonnancement (O) des entrées-sorties de/sur la carte apte à activer les moyens d'exécution (ET) des tâches lorsque ledit circuit d'ordonnancement (O) est en attente d'une entrée ou d'une sortie.

10. Microcircuit selon l'une des revendications 5 à 9, **caractérisé en ce qu'**il comprend des moyens de stockage (M3) des résultats desdits calculs.

11. Carte à microcircuit sans contact, **caractérisé en ce qu'**elle comprend un microcircuit selon l'une des revendications 5 à 10.

12. Carte à microcircuit à contact, **caractérisé en ce qu'**elle comprend un microcircuit selon l'une des revendications 5 à 10.

13. Carte à microcircuit fonctionnant en mode sans contact ou en mode avec contact, **caractérisé en ce qu'**elle comprend un microcircuit selon l'une des revendications 5 à 10.

**Claims**

1. Method of cryptography comprising stages of cryptographic calculation used by a chip card comprising a microprocessing unit, the said method further comprising one or more pre-calculation stages, **characterised in that** the said pre-calculation stage(s) are carried out by the chip card itself and **in that** the said pre-calculation stage(s) are carried out during a session operated by the chip card and during the input/output waiting periods of its microprocessing unit.

2. Method of cryptography according to claim 1, **characterised in that** the said method uses an algorithm based on discrete logarithm.

3. Method of cryptography according to one of the previous claims, **characterised in that** the pre-calculations comprise exponentiation calculations.

4. Method of cryptography according to one of the previous claims, **characterised in that** the pre-calculations are carried out in stages via intermediary calculations and **in that** the results of these intermediary calculations are stored in the chip card.

5. Microcircuit for a chip card likely to communicate with the outside via an input/output interface (I), comprising means of task execution (ET), the tasks including a calculation task (PC), and means of task execution management (GE), **characterised in that** the means of management (GE) comprise means of actuating (APC) the calculation task (PC) during the waiting periods of the other task(s) activated on the microcircuit.

6. Microcircuit according to claim 5, **characterised in that** the means of task execution (ET) comprise a microprocessor (UC), a programme memory (M1) comprising the task execution management programme and an application software memory (M3) comprising the executable task(s) in the form of one or more application software.

7. Microcircuit according to claim 6, **characterised in that** the means of task execution (ET) further comprise a cryptographic calculation circuit (CP).

8. Microcircuit according to one of claims 5 to 7, **characterised in that** the means of task execution (ET) are capable of carrying out exponentiation calculations.

9. Microcircuit according to one of claims 5 to 8, **characterised in that** the means of actuating (APC) the calculation task comprise an input/output job scheduling circuit (O) from/on the card capable of actuating the means of task execution (ET) when the said job scheduling circuit (O) is awaiting an input or output.

10. Microcircuit according to one of claims 5 to 9, **characterised in that** it comprises means of storing (M3) the results of the said calculations.

11. Microcircuit card without any contact, **characterised in that** it comprises a microcircuit according to one of claims 5 to 10.

12. Microcircuit card with a contact, **characterised in that** it comprises a microcircuit according to one of claims 5 to 10.

13. Microcircuit card operating with or without a contact, **characterised in that** it comprises a microcircuit according to one of claims 5 to 10.

**Patentansprüche**

1. Verschlüsselungsverfahren mit Schritten zur kryptografischen Berechnung, das durch eine Chipkarte durchgeführt wird, die eine Zentraleinheit umfasst, wobei das Verfahren außerdem einen oder mehrere Schritte zur Vorberechnung umfasst, **dadurch gekennzeichnet, dass** der oder die Vorberechnungsschritte von der Chipkarte selber vorgenommen werden, und dass der oder die Vorberechnungsschritte bei einer Sitzung, die von der Chipkarte bewirkt wird, und während Ein-/ Ausgangs-Warteperioden ihrer Zentraleinheit vorgenommen werden.

2. Verschlüsselungsverfahren nach Anspruch 1, **dadurch gekennzeichnet, dass** das Verfahren einen auf dem diskreten Logarithmus basierenden Algorithmus einsetzt.

3. Verschlüsselungsverfahren nach einem der vorhergehenden Ansprüche, **dadurch gekennzeichnet, dass** die Vorberechnungen Exponentiationsrechnungen umfassen.

4. Verschlüsselungsverfahren nach einem der vorhergehenden Ansprüche, **dadurch gekennzeichnet, dass** die Vorberechnungen schrittweise erfolgen, indem Zwischenberechnungen ausgeführt werden, und dass die Ergebnisse dieser Zwischenberechnungen in der Chipkarte gespeichert werden.

5. Mikroschaltung für eine Chipkarte, die in der Lage ist, mit der Außenwelt über eine Ein-/Aus-Schnittstelle (I) zu kommunizieren, umfassend Mittel zum Ausführen von Aufgaben (ET), darunter eine Berechnungsaufgabe (PC), und Mittel zur Verwaltung (GE) der Aufgabenausführung, **dadurch gekennzeichnet, dass** die Verwaltungsmittel (GE) Mittel zum Aktivieren (APC) der Berechnungsaufgabe (PC) während der Wartezeiten der anderen aktiven Aufgabe(n) auf der Mikroschaltung umfassen.

6. Mikroschaltung nach Anspruch 5, **dadurch gekennzeichnet, dass** die Mittel zur Aufgabenausführung (ET) einen Mikroprozessor (UC), einen Programmspeicher (M1), der das Programm zur Verwaltung der Aufgabenausführung umfasst, und einen Speicher (M3) für Anwendungsprogramme, der die ausführbare(n) Aufgabe(n) in Form eines oder mehrerer Anwendungsprogramme umfasst, umfassen.

7. Mikroschaltung nach Anspruch 6, **dadurch gekennzeichnet, dass** die Mittel zur Aufgabenausführung (ET) außerdem eine Schaltung zur kryptografischen Berechnung (CP) umfassen.

8. Mikroschaltung nach einem der Ansprüche 5 bis 7, **dadurch gekennzeichnet, dass** die Mittel zur Aufgabenausführung (ET) geeignet sind, um Exponentiationsberechnungen auszuführen.

9. Mikroschaltung nach einem der Ansprüche 5 bis 8, **dadurch gekennzeichnet, dass** die Mittel (APC) zur Aktivierung der Berechnungsaufgabe eine Schaltung zur Verarbeitung (O) der Ein-/Ausgänge der Karte bzw. darauf umfassen, die in der Lage ist, die Mittel zur Aufgabenausführung (ET) zu aktivieren, wenn die Verarbeitungsschaltung (O) auf einen Eingang oder einen Ausgang wartet.

10. Mikroschaltung nach einem der Ansprüche 5 bis 9, **dadurch gekennzeichnet, dass** sie Mittel zum Speichern (M3) der Ergebnisse der Berechnungen umfasst.

11. Karte mit berührungsloser Mikroschaltung, **dadurch gekennzeichnet, dass** sie eine Mikroschaltung nach einem der Ansprüche 5 bis 10 umfasst.

12. Karte mit berührungsloser Mikroschaltung, **dadurch gekennzeichnet, dass** sie eine Mikroschaltung nach einem der Ansprüche 5 bis 10 umfasst.

13. Karte mit Mikroschaltung, die mit oder ohne Berührung funktioniert, **dadurch gekennzeichnet, dass** sie eine Mikroschaltung nach einem der Ansprüche 5 bis 10 umfasst.

Signal RF

Vcc
Vss
H
R

E/S

CN

RF

H,R

E/S

UART

M2

UC

CP

M3

M1

bus

MC

C

## Fig. 1

S A V

Choix de n, g, $P_A$, h, $S_A$

Envoi de n, g, $P_A$ et h

Envoi de n, g, $P_A$ et h

Choix de x, calcul de y

Envoi de y

Certification de y par $S_A$

Envoi de Cert

## Fig. 2a

S V

n, g, $P_A$, h, Cert, x et y n, g, $P_A$ et h

m

Envoi de M

Signature de M

Envoi de la signature

## Fig. 2b

Vérification de la Signature de M

Utilisateur        PME                  P           F

Insertion de PME dans
P

Message de demande
de rechargement

Demande
d'authentification

Signature

Message +
signature

Authentification de la
signature de PME puis
rechargement et
signature

10 à 25
secondes

Rechargement
+ signature F

Authentification de la
signature de F

## Fig. 3

11

**Fig. 4**

I

Reprise avec
i,T,c
sauvegardés

Nouveau calcul de témoin
$T=1$
$c=p$
Choisir k aléatoirement
$k=k_0+2k_1+...+2^i k_i+...+2^{L-1}k_{L-1}$
Stocker K
$i=L$

II     $i>=0?$    non   → Stocker (k,T);
Nouveau calcul

oui

III     $k_i=1?$    oui   → $T=Tg \bmod n$

non

IV     $T=T^2 \bmod n$

V     $c=0?$    oui   → Stocker résultat
intermédiaire: i,T,c;
$c=p$

non

VI     $i=i-1$

# Fig. 5